# EUROPÄISCHE PATENTANMELDUNG

(11) **EP 2 184 833 A2**
(43) Veröffentlichungstag der Anmeldung: **12.05.2010**
(21) Anmeldenummer: 09177516.3
(22) Anmeldetag: 11.07.2008
(51) Int. Cl.: H02J 9/06, H02J 3/38, H02P 5/74

(54) **Verfahren und Vorrichtung zur Steuerung einer Druckmaschine bei einer Störung oder einem Ausfall im elektrischen Versorgungsnetz**

(30) Priorität: 13.07.2007 DE 102007032747; 23.08.2007 DE 102007039915; 05.03.2008 DE 102008012634
(62) Teilanmeldung aus: 08773971.0
(71) Anmelder: WIFAG Maschinenfabrik AG, 3001 Bern (CH)
(72) Erfinder: Burri, Daniel, 3510 Konolfingen (CH); Fröhlich, Martin, 3098 Köniz (CH)
(74) Vertreter: Gassenhuber, Andreas

(57) **Zusammenfassung**

Die vorliegende Erfindung betrifft ein Verfahren zum Stillsetzen einer Druckmaschine (4) bei Netzausfall, wobei ein Netzausfall des Versorgungsnetzes (10) detektiert wird und bei Detektion des Netzausfalls die Druckmaschine (4) vom elektrischen Netz (10) getrennt wird und Vorrichtung zum Stillsetzen einer Druckmaschine (4) bei Netzausfall mit einem Netzausfalldetektionselement (1, 6) und einem Netztrennelement (2), welches mit dem Netzausfalldetektionselement (1,6) verbunden ist und bei Detektion des Netzausfalls die Druckmaschine (4) von elektrischen Netz (10) trennen kann.

## Beschreibung

Die Erfindung betrifft ein Verfahren und eine Vorrichtung zur Steuerung einer Druckmaschine bei einer Störung oder einem Ausfall im elektrischen Versorgungsnetz. Insbesondere soll eine Druckmaschine, vorzugsweise eine Rotationsdruckmaschine mit Direktantriebstechnik, bei Netzausfall kontrolliert heruntergefahren oder stillgesetzt werden.

Spätestens seit der Einführung der Direktantriebsrechnik im Druckmaschinenbau im Jahre 1995 sind Antriebssysteme an Druckmaschinen bekannt, wobei aus dem dreiphasigen elektrischen Versorgungsnetz über einen Gleichrichter ein Gleichspannungszwischenkreis gespeist wird. Diese Gleichrichter sind auch in der Lage, Energie aus dem Zwischenkreis in das elektrische Netz zurückzuspeisen. Aus dem Zwischenkreis werden über geeignete Wechselrichter die Antriebe der Druckmaschine mit Energie versorgt. Auch die Wechselrichter sind in der Lage, Energie aus den Antrieben in den Zwischenkreis zurückzuspeisen. Diese Eigenschaften werden seit der Einführung der Direktantriebstechnik verwendet, um den Energiebedarf der Druckmaschine zu verringern. Ebenfalls seit diesem Zeitpunkt ist die Idee bekannt, bei Netzausfall den kinetischen Energieinhalt zu nutzen, um die Druckmaschine kontrolliert stillzusetzen.

Eine unterbrechungsfreie Stromversorgung (USV) ist beispielsweise aus der EP 0 872 942 B1 bekannt.

In der DE 195 20 642 C1 wird beschrieben, dass die kinetische Energie des Gesamtsystems ausgenutzt wird, um die Maschine stillzusetzen. Die Bremsrampe wird so gewählt, dass die Gleichstromzwischenkreise immer auf der vollen Gleichspannung betrieben werden. Jedoch steht bei kleinen Drehzahlen zu wenig kinetische Energie zur Verfügung, um die Gleichstromzwischenkreise zu speisen. Wenn die Gleichstromzwischenkreise unter einen bestimmten Wert absinken, können die Antriebe nicht mehr kontrolliert werden.

In der DE 20 2005 020 612 U1 wird eine Vorrichtung beschrieben, welche die Netzspannung überwacht und bei Netzausfall bewegliche Elemente abbremst. Die kinetische Energie wird bei diesem Vorgang in elektrische Energie umgewandelt, die zur Weiterführung des Betriebs der Anlage verwendet wird. Die Ausführung ohne externe Schwungräder hat den Nachteil, dass bei kleinen Drehzahlen zu wenig Energie zur Verfügung steht, um die Antriebe zu kontrollieren. Die Ausführung mit externen Schwungrädern hat den Nachteil, dass diese externen, rotierenden Massen den Gesamtwirkungsgrad der Anlage negativ beeinflussen. Zudem ist die Dimensionierung dieser Massen abhängig von der Anlagengröße. Insbesondere bei nachträglichen Anlagenerweiterungen fallen beträchtliche Kosten für die Erweiterung der externen Schwungmassen an.

In der EP 1 223 656 B1 wird eine unterbrechungsfreie Stromversorgung beschrieben, die der Druckmaschine vorgeschaltet wird. Bei einem Netzausfall wird eine Steuerfolge abgearbeitet, die einen standardmäßig definierten Produktionshalt auslöst und im weiteren Verlauf wird die Druckmaschine in einen Standbybetrieb versetzt. Einzelne Verbraucher in Form von Kühlaggregaten und Pumpen können abgeschaltet werden. Die Maschine wird über die USV betrieben, wodurch nicht unerhebliche Verluste in der Größenordnung von einigen Prozenten der bezogenen Leistung entstehen. Ein Dauerbetrieb lohnt sich daher nur für Netze mit einer relativ hohen Ausfallwahrscheinlichkeit.

Der Ausfall der Versorgungsspannung (Netzausfall) kann aufgefangen werden, indem die Antriebe einer Baugruppe über einen Spannungszwischenkreis miteinander verbunden werden, wie z.B. in der EP 0 753 405 B1 beschrieben. Der Ausfall von Antrieben kann in verschiedenen Baugruppen über eine aus dem Stand der Technik bekannte mechanische Lösung beherrscht werden. Eine mechanische Lösung zur Verbindung der einzelnen Baugruppen ist aufwendig und schränkt die Produktionsflexibilität der Maschine stark ein.

In der DE 10 2007 032 747.3 und der DE 10 2007 039 915.6 der Anmelderin wird beschrieben, wie ein Netzmaster ein Inselnetz über eine Dreiphasen-Verkabelung aufbaut.

Zu diesem Zweck wird nach dem Detektieren des Netzausfalles die Maschine mit einem geeigneten Schaltelement vom elektrischen Versorgungsnetz getrennt. Im Weiteren wird die Aufteilung des Antriebsverbundes in verschiedene Teilverbunde beschrieben. Vorzugsweise wird ein schnelles Schaltelement für die Trennung der Maschine vom Versorgungsnetz verwendet. Fällt dieses Element aus, kann die Maschine nicht mehr betrieben werden. Die Verfügbarkeit kann jedoch mit zusätzlichen Maßnahmen, wie z.B. Bypassschalter, wieder erhöht werden. Die Lehren der genannten Anmeldungen bezüglich des Trennens einer Maschine von einem Versorgungsnetz und bezüglich des Herunterfahrens einer Maschine werden in diese Anmeldung aufgenommen.

Druckmaschinen mit Direktantrieben haben den Nachteil, dass Spannungseinbrüche und Spannungsunterbrüche in der Regel zum Riss von Bahnen führen, da die Antriebe nicht mehr kontrolliert werden können. Bei zeitkritischen Produktionen kann schon ein einzelner Zwischenfall zu einer uneinholbaren Verspätung führen.

Hardwareseitig muss die Voraussetzung geschaffen sein, dass zwischen verschiedenen Maschinenmodulen Energie ausgetauscht werden kann. Das kann über eine externe USV erfolgen oder über ein Inselnetz auf der AC-Verkabelung oder über ein Verbundnetz, das die DC-Zwischenkreise miteinander verbindet.

Es ist eine Aufgabe der vorliegenden Erfindung ein Verfahren und eine Vorrichtung zur Steuerung einer Maschine, insbesondere einer Druckmaschine bei Netzstörung vorzuschlagen. Ein bevorzugtes Ziel des Verfahrens ist es, die Maschine weiter im produktiven Betrieb zu halten. Ist das nicht möglich, soll sie ohne Bahnriss zum Stillstand gebracht werden können.

Nachfolgend wird beispielhaft auf eine Druckmaschine als materialführende Maschine verwiesen, wobei alle Ausführungen auch für Maschinen gelten, welche ein anderes Material als eine Bedruckstoff- oder Papierbahn führen.

Eine vorteilhafte Lösung besteht darin, dass zwischen material- oder papierführenden Elementen, z.B. Rollenwechsler, Zugwalzen, umschlungene Gegendruckzylinder, Trichterwalzen und Falzapparat, als Verbraucher einerseits, und nicht material- oder papierführenden Elementen, z.B. Druckwerke, als Erzeuger andererseits, unterschieden wird.

Die nicht papierfükenden Elemente versorgen bei Bedarf, also z.B. bei Ausfall der externen Stromversorgung, die papierführenden Elemente.

Sofern in dieser Anmeldung von dem Herunterfahren oder Stillsetzen einer (Druck)Maschine gesprochen wird, soll darunter sowohl der Vorgang des Abbremsens, als auch ein Beschleunigungsvorgang, verstanden werden, welche jeweils das Ziel haben (Druek)Maschinenkomponenten in Richtung auf das gewünschte kontrollierte Herunterfahren oder Stillsetzen der (Druck)Maschine möglichst aufeinander synchronisiert herunterzufahren. Dies kann, falls z.B. durch eine Steuereinheit festgestellt wird, dass eine (Druck)Maschinenkomponente oder ein Motor zu schnell abgebremst wurde, auch ein Beschleunigen der jeweiligen Komponente oder des jeweiligen Motors erforderlich machen, um wieder mit den anderen Komponenten z.B. eines Antriebsverbundes synchronisiert zu sein. Ebenso umfasst diese Anmeldung auch das kontrollierte Hochfahren einer Maschine während des Herunterfahrens oder nach dem Stillsetzen, wenn wieder Verbindung zum externen Netz besteht.

Die Erfindung wird anhand bevorzugter Ausführungsformen unter Bezugnahme auf die beiliegenden Figuren erläutert.

Es zeigen:
- Figur 1: eine schematische Darstellung einer vom Versorgungsnetz getrennten Druckmaschine aufgeteilt in zwei virtuelle Antriebsverbunde;
- Figur 2a: das Herunterfahren der Antriebsverbunde nach Detektion eines Spannungsausfalles gemäß einer ersten Ausführungsform;
- Figuren 2b und 2c: das Herunterfahren und Wiederanfahren der Antriebsverbunde nach Detektion eines Spannungsausfalles gemäß einer zweiten Ausführungsform;
- Figur 3: eine Ausführungsform einer Druckmaschine mit verbundenen aber entkoppelten Zwischenkreisen;
- Figuren 4a bis 4d: Ausführungsformen der in Figur 3 gezeigten Kopplunngsmodule.

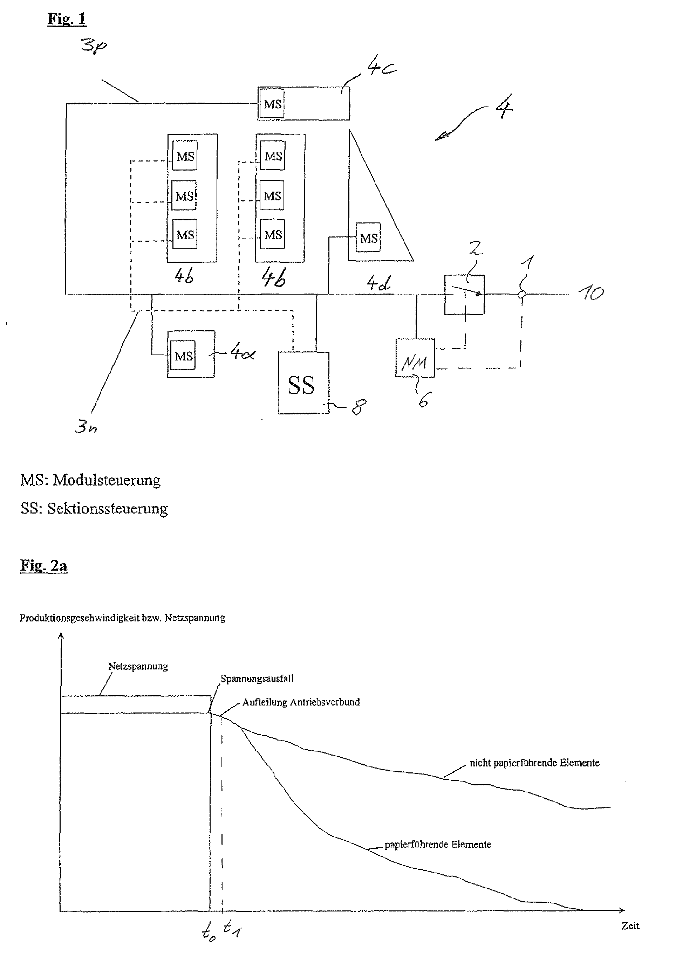

Figur 1 zeigt eine schematische Darstellung einer Druckmaschine 4, welche nach Detektion eines Netzausfalls bereits vom externen oder Stromeinspeisungsnetz 10 getrennt wurde. Eine Sektionssteuerung SS 8 steuert getrennt voneinander den (virtuellen) Verbund papierführender Elemente 3p und den (virtuellen) Verbund nicht papierführender Elemente 3n. Über den Verbund papierführender Elemente 3p sind der Rollenwechsler 4a, die Wendeetagen 4c und der Falztunn 4d miteinander verbunden, wobei jeweils mindestens eine Modulsteuerung MS zur Steuerung der jeweiligen Druckmaschinenkomponente 4a, 4c und 4d vorgesehen ist. Der Verbund nicht papierführender Elemente 3n umfasst die Drucktürme 4b, deren Druckwalzen vorzugsweise schon unmittelbar nach der Detektion des Netzausfalles von der Papierbahn abgestellt worden sind.

Ein optional vorgesehenes Netzausfallsdetektionselement 1 führt eine Netzmessung des 3-phasigen Versorgungsnetzes 10 durch und ist mit einem optional vorgesehenen Netzmaster 6 verbunden, welcher z.B. ein optional vorgesehenes Netztrennelement 2 z.B. in Form eines Leistungsschalters ansteuert, um bei einem detektierten Netzausfall oder einem detektierten Absenken oder Nachlassen der Netzspannung das Netz 3 der Druckmaschine 4 von dem externen oder Speisenetz 10 zu trennen.

Der Netzmaster 6 detektiert den Netzausfall und trennt bei einer Ausführungsform das elektrische Maschinennetz 3 sofort vom elektrischen Versorgungsnetz ab. Die Antriebe werden so geregelt, dass die Zwischenkreisspannungen aller Versorgungssysteme in einem zulässigen Bereich sind.

Wenn möglich werden die Elemente, welche sich an der Papierbahn befinden und diese nicht führen, vom Papier abgestellt (z.B. Druckbrücken), damit sie mit einer beliebigen Drehzahl betrieben werden können.

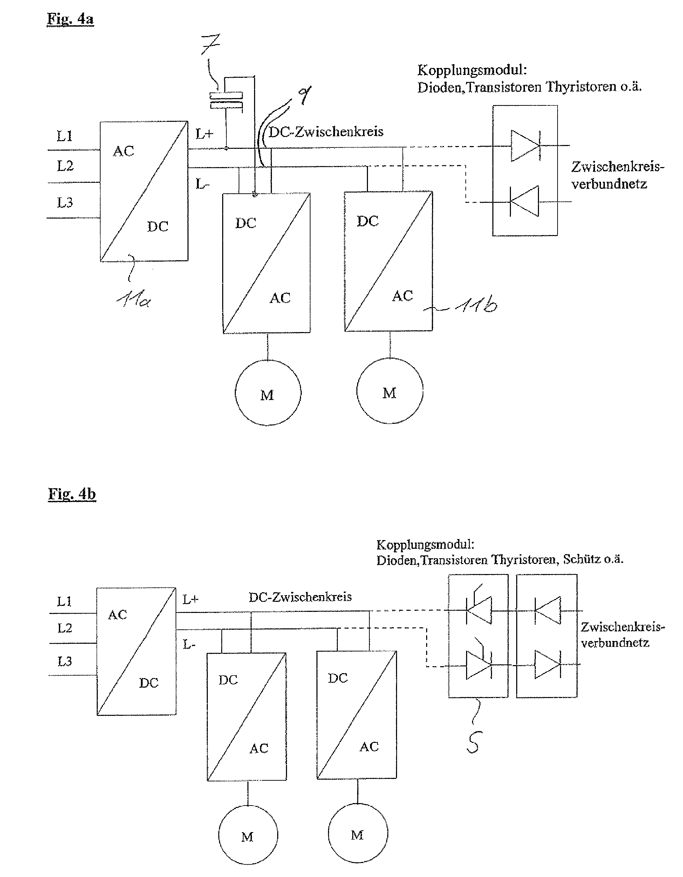

Der Netzmaster 6 baut ein elektrisches Inselnetz auf, mit dem die Antriebssysteme und insbesondere die Motoren der Maschine, welche beim Abbremsen auch als Generatoren betrieben werden können, Energie in beide Richtungen austauschen können. Dieses Inselnetz kann ein Dreiphasensystem mit Gleichrichter 11 a und Wechselrichter 11b (Fig. 4a, 4b), aber auch ein Gleichspannungssystem sein. Wird ein Gleichspannungssystem aufgebaut, schalten die Versorgungseinheiten ihren internen DC-Zwischenkreis 9 auf die Dreiphaseninstallation der Maschine z.B. mittels Transistorschalter durch. Zum Beispiel wird L1 zu L+ und L2 zu L-. Alle Elemente, die durch die DC Spannung beschädigt werden könnten, sollten zum Zeitpunkt des Aufschaltens der DC-Spannung abgetrennt sein.

Die Gleichrichterschaltung 11a der Versorgungseinheit kann als Gleichrichter und gleichzeitig als Aufwärtswandler betrieben werden. Die Gleichspannung in den Zwischenkreisen können im 400 VAC-Netz zwischen ca. 560 VDC bis 800 VDC eingestellt werden, dabei wird die untere Grenze durch die Netzspannung gegeben. Der bevorzugte Wert für den "Verbraucher" Zwischenkreis beträgt 700 VDC bis 800 VDC und für den "Erzeuger" Zwischenkreis 650 VDC bis 750 VDC

Zwischen den Leitungen L+ und L- des Zwischenkreises (Figuren 4a und 4b) kann ein Kondensator 7, z.B. ein gepolter oder bipolarer Elektrolytkondensator, vorgesehen sein, welcher z.B. den DC-Zwischenkreis stabilisiert und Energie speichert, die z.B. beim Herunterfahren verwendet oder an das Zwischenkreisverbundnetz abgegeben werden kann.

Über den Netzmaster 6 wird im Inselnetz der Maschine z.B. ein 3-phasiges elektrisches Netz aufgebaut. Alle verbundenen Elemente synchronisieren sich mit diesem Netz und können damit Energie austauschen. Besonders vorteilhaft ist dabei, dass anfallende Energie nicht in Bremswiderständen verheizt werden muss sondern anderen Elementen zur Verfügung gestellt werden kann. Daraus ergibt sich eine flachere Anhalterampe durch welche Papierrisse verhindert werden können.

Es ist auch möglich dass die über die Maschine verteilten Versorgungseinheiten nach dem Trennen der Maschine vom elektrischen Netz auf der bestehenden 3phasigen. Verkabelung ein DC-Netz aufbauen. Über diesen temporär gebildeten Zwischenkreis können jetzt die einzelnen Antriebe auf einfachste Weise Energie austauschen.

Bei dieser Lösung entfällt der Nachteil, dass eine zentrale große Einspeiseeinheit erforderlich ist und dass der DC-Bus physikalisch auf der Maschine verlegt werden muss.

Zudem ist die hier vorgeschlagene Lösung skalierbar. Das heißt wenn die Maschine mit weiteren Elementen ausgebaut wird muss keine zentrale Gleichstromversorgungseinheit vergrößert werden.

Der Antriebsverbund der Maschine wird somit aufgeteilt in papierführende und nicht papierführende Elemente. Damit wird sichergestellt, dass die papierführenden Elemente 4a, 4c, 4d bis zum Stillstand mit Energie versorgt werden können, welche z.B. aus den abgebremsten Drucktürmen 4b stammt. Es können auch beliebige weitere Antriebsverbunde gebildet werden, zum Beispiel um die Regelung des Inselnetzes zu verbessern. Der Antriebsverbund wird z.B. aufgetrennt, indem zwei oder mehr Leitachssollwerte auf der Maschine verteilt werden. Die Leitachssollwerte werden über einen geeigneten Feldbus, z.B. Sercos, an die Modulsteuerungen gesendet.

Das Inselnetz 3 kann z.B. in galvanisch getrennte Systeme oder Verbunde aufgeteilt werden, welche jedoch elektrische Leistung oder Signale untereinander austauschen können. Alternativ oder ergänzend ist es auch möglich, dass ein oder mehrere Verbunde gebildet werden, welche sich steuerungstechnisch an verschiedenen innerhalb des Verbundes jedoch vorgegebenen Führungssollwerten oder Leitachsen orientieren. In diesem Fall können die in Figur 1 gezeigten Verbunde 3p und 3n auch als so genannte virtuelle Verbunde angesehen werden.

Eine erste Ausführungsform gemäß Netzausfallstrategie 1 ist in Figur 2a gezeigt. Wird ein Netzausfall detektiert - der Netzausfall kann im AC-Versorgungsnetz oder in einem DC-Zwischenkreis detektiert werden - leitet die Maschinensteuerung oder Sektionssteuerung SS sofort eine geeignete Bremsrampe ein. Die Druckbrücken der Drucktürme 4b stellen sofort "Druck ab" und werden so zu nicht papierführenden Elementen. Diese nicht papierführenden Elemente sorgen vorzugsweise jedes für sich - mit einer vorzugsweise jeweils eigenen geeigneten Bremsrampe dafür, dass ihr eigener Zwischenkreis in zulässigen Grenzen gehalten wird, typischerweise liegen diese Werte zwischen 300 und 900 VDC. Über die geeignete Hardware fließt bei Bedarf elektrische Energie von den nicht papierführenden Elementen zu den papierführenden Elementen. Ein etwaiger Energieüberschuss wird z.B. in elektrischen Widerständen, mechanischen Bremsen etc. in Wärme umgewandelt und an ein Kühlmedium, z.B. Luft, Wasser etc., abgegeben.

Figur 2a (Netzausfallstrategie 1) zeigt ein mögliches Verhalten der Maschine wenn die Netzspannung zum Zeitpunkt t₀ ausfällt. Die Steuerung, welche den Produktionsverbund führt, leitet eine Bremsrampe ein. Es wird keine Energie mehr aus dem elektrischen Versorgungsnetz benötigt. Nach einer bestimmten Zeit t₁ kann der Antriebsverbund in mehrere Verbunde aufgeteilt werden. Vorteilhafterweise wird er in einen papierführenden und einen nicht papierführenden Verbund aufgeteilt. Der papierführende Verbund wird zum Stillstand gebracht, wobei der papierführende Verbund bevorzugt mit Energie aus dem nicht papierführenden Verbund kontrolliert abgebremst wird und vor dem nicht papierführenden Verbund zum Stillstand kommt. Der nicht papierführende Verbund stellt z.B. mit einer geeigneten Bremsrampe seiner Antriebe die Energieversorgung des papierführenden Verbundes sicher.

Es können auch mehrere Antriebsverbunde gebildet werden. Ein Antriebsverbund kann einen einzigen oder mehrere Antriebe beinhalten. Ein Antriebsverbund kann zentral von der Sektionssteuerung SS geführt werden. Ein Antriebsverbund kann aber auch von einer Modulsteuerung MS geführt werden. Die Steuerungen SS und MS können mehrere Antriebsverbunde bilden und führen. Dies hat den Vorteil, dass z.B. papierführende Elemente schneller und kontrolliert, d.h. aufeinander abgestimmt abgebremst werden können als nicht papierführende Elemente, so dass kein Riss in der Papierbahn entsteht. Die nicht papierführenden Elemente können alle einzeln mit eigenen Bremsrampen, in Gruppen oder als Ganzes abgebremst werden. Damit kann die Rotationsenergie optimal genutzt werden. Es kann auch sichergestellt werden, dass die papierführenden Elemente auch bei kleiner Drehzahl mit Energie versorgt werden können.

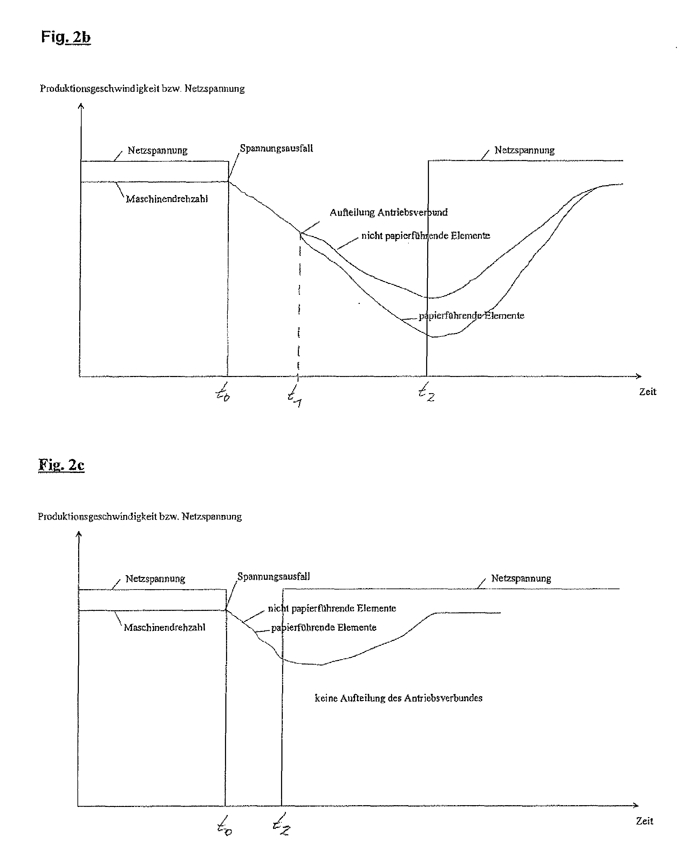

Eine zweite Ausführungsform gemäß Netzausfallstrategie 2 ist in den Figuren 2b und 2c veranschaulicht. Wird ein Netzausfall detektiert, leitet die Maschinensteuerung (Sektionssteuerung) sofort eine geeignete Bremsrampe ein. Die Druckbrücken bleiben "Druck an", so dass weiter verkaufsfähige Exemplare gedruckt werden können. Die Maschinensteuerung regelt die Bremsrampe so, dass die Spannung in der zusätzlichen Zwischenkreisverkabelung nicht unter einen zulässigen Wert absinkt. Bei Bedarf, insbesondere bei zu tiefer Zwischenkreisspannung, kann jederzeit auf die Netzausfallstrategie 1 umgeschaltet werden, so dass z.B. die Druckbrücken abgestellt werden.

Figur 2b zeigt ein mögliches Verhalten der Maschine, wenn die Netzspannung ausfällt und nach einer bestimmten Zeit t₂ wieder zur Verfügung steht. Die Steuerung, welche den Produktionsverbund führt, leitet eine Bremsrampe ein. Es wird keine Energie mehr aus dem elektrischen Versorgungsnetz benötigt. Nach einer bestimmten Zeit t₁, z.B. festgelegt durch einen Spannungsabfall unterhalb eines vorgegebenen zulässigen Wertes, kann der Antriebsverbund in mehrere Verbunde aufgeteilt werden. Vorteilhafterweise wird er in einen papierführenden und einen nicht papierführenden Verbund aufgeteilt. Der papierführende Verbund wird weiter abgebremst. Kehrt die Netzspannung zurück, bevor der Verbund zum Stillstand gebracht worden ist, wird er wieder auf eine Produktionsgeschwindigkeit gebracht. Der nicht papierführende Verbund stellt mit einer geeigneten Bremsrampe seiner Antriebe während des Netzausfalls die Energieversorgung des papierführenden Verbundes sicher. Kehrt die Netzspannung zurück, kann der nicht papierführende Verbund auf eine Produktionsgeschwindigkeit gebracht werden. Alle Antriebsverbunde können wieder zu einem Produktionsverbund zugeteilt werden.

Figur 2c (Netzausfallstrategie 2) zeigt ein mögliches Verhalten der Maschine wenn die Netzspannung ausfällt und nach einer bestimmten Zeit t₂ wieder zur Verfügung steht. Die Steuerung, welche den Produktionsverbund führt, leitet eine Bremsrampe ein. Es wird keine Energie mehr aus dem elektrischen Versorgungsnetz benötigt. Kehrt die Netzspannung vor dem Erreichen eines unzulässigen Wertes, also z.B. vor Unterschreitung einer z.B. fest vorgegebenen Mindestspannung von z.B. 95%, 90%, 80% oder 70% der Netzspannung zurück bevor der Verbund zum Stillstand gebracht worden ist, wird die Druckmaschine nicht weiter heruntergefahren und wieder auf Produktionsgeschwindigkeit gebracht.

Bei beiden Netzausfallstrategien besteht ein wesentlicher Vorteil darin, dass im Falle einer Normalisierung des elektrischen Versorgungsnetzes die Maschine sofort wieder aus dem Netz versorgt werden kann. Damit können kurze Netzunterbrüche überbrückt werden, ohne dass die Maschine stillgesetzt werden muss. Befindet sich die Maschine in Netzausfallstrategie 2, kann sie ohne Produktionsunterbruch weiterdrucken. Es fällt keine oder nur sehr wenig Makulatur an. Befindet sich die Maschine in Netzausfallstrategie 1, kann sie wieder auf eine Fortdruckgeschwindigkeit gebracht werden. Die Druckzylinder stellen "Druck an" und die Maschine produziert weiter.

Das erfinderische Verfahren ist in allen Strategievarianten geeignet für Maschinen mit mehreren lokalen Zwischenkreisen, die kinetische Energiespeicher z.B. in Form von rotierenden Zylindern o.ä. aufweisen. Besonders gut kann die Erfindung auf Druckmaschinen angewendet werden. Im weiteren ist die Erfindung auf Maschinen anwendbar, die eine Materialbahn oder einen Draht o.ä. transportieren, z.B, Convertingmaschinen und Siliziumsägen.

Gemäß einem weiteren Aspekt wird eine Vorrichtung zur Durchführung des Verfahrens zur Steuerung einer Druckmaschine bei Störungen im elektrischen Versorgungsnetz oder bei Ausfall des Versorgungsnetzes geschaffen.

Dabei ist aus DE 10 2004 022 234 A1 bekannt, dass die Gleichspannungszwischenkreise über einen Gleichspannungsversorgungsbus parallel geschaltet sind. Dieser Versorgungsbus wird von einem Versorgungsmodul mit einer gleichgerichteten Netzeingangsspannung versorgt. Dabei wird der Zwischenkreis, der über die ganze Maschine geführt wird, über einen einzigen Gleichrichter eingespeist. Fällt dieser Gleichrichter aus, kann die ganze Maschine nicht mehr betrieben werden. Zudem muss dieser Gleichrichter sehr leistungsstark ausgeführt werden, da er die ganze Maschine mit Gleichstrom versorgen muss. Insbesondere dann, wenn nur Teile der Druckmaschine verwendet werden, fallen unnötige Verluste in Drosselspulen und dergleichen an.

Bei Maschinen mit verteilten, teilweise lagesynchronen Antriebssystemen führen Spannungseinbrüche und Spannungsunterbrüche in der Regel zu einem Verlust der Lagesynchronität und damit zum Bruch des geförderten Endlosmaterials, wie z.B. Papier, Folie, Bahn, Draht etc. Bei zeitkritischen Produktionen kann ein einziger Zwischenfall zu einer uneinholbaren Verspätung führen.

Solche Zwischenfälle können durch Vorschalten von z.B. rotierenden, unterbrechungsfreien Stromversorgungen (USV) verhindert werden, wie in der schon erwähnten EP 1 223 656 A1 beschrieben. Solche Lösungen sind auf der einen Seite teuer in der Anschaffung auf der anderen Seite teuer im Betrieb aufgrund ihrer eigenen Verluste. Im weiteren sind diese Anlagen nur bedingt erweiterbar. Somit muss jede Maschinenerweiterung entweder von Anfang an eingeplant werden, oder es muss beim Zeitpunkt des Maschinenausbaus mit erheblichen Kosten für die Erweiterung der USV-Anlage gerechnet werden.

Dieses Problem kann mit der Bildung eines Inselnetzes über die normale Verkabelung zur Energieverteilung gelöst werden. Jedoch wird eine schnelle sichere Netztrennung benötigt. Es sollte im Falle der DC-Aufschaltung auf den AC-Versorgungskreis sichergestellt werden, dass alle AC-Verbraucher, die nicht zum Antriebssystem gehören, galvanisch getrennt sind. Dies kann z.B. durch ein separates AC-Versorgungsnetz erreicht werden.

Mit der vorliegenden Erfindung kann das Problem der nichtkontrollierbaren Antriebe gelöst werden, ohne dabei die beschriebenen Nachteile in Kauf nehmen zu müssen. Eine Druckmaschine kann bei Netzausfall ohne Papierriss weiterbetrieben oder stillgesetzt werden.

Das bewährte dezentrale Gleichspannungszwischenkreis-Einspeisekonzept kann beibehalten werden. Damit wird die Zuverlässigkeit der Anlage auf hohem Niveau gehalten und die einzelnen Maschinenmodule können rationell gefertigt und getestet werden.

Die erfindungsgemäße Einrichtung erzeugt keine, oder praktisch keine, zusätzlichen Energieverluste und kann bei einer Maschinenerweiterung ohne spezielle Investitionen automatisch der neuen Maschinengröße angepasst werden.

Insbesondere kann die Erfindung eingesetzt werden, wenn bei kleinen Maschinendrehzahlen zu wenig kinetische Energie zur Stillsetzung der Antriebe zur Verfügung steht.

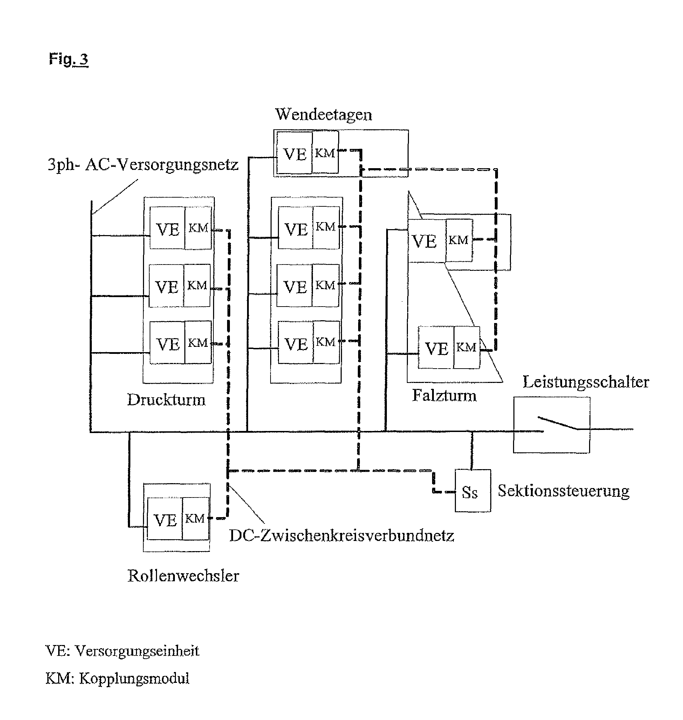

Figur 3 zeigt, dass die Zwischenkreise der verschiedenen Versorgungseinheiten durch ein zusätzliches gestrichelt eingezeichnetes Zwischenkreisverbundnetz z.B. in Form einer Verkabelung verbunden werden. Damit keine unbeabsichtigten Lastflüsse entstehen, werden die Zwischenkreise über geeignete Schaltelemente, wie z.B. Dioden, Transistoren, Thyristoren, etc., in jeweiligen Kopplungsmodulen KM entkoppelt, wie in den Figuren 4a bis 4d gezeigt. Bei Bedarf können zusätzlich Drosseln und Kondensatoren installiert werden. Die Verkabelung ist so ausgeführt, dass einzelne Stromkreise über Leitungsschutzschalter sicher abgeschaltet werden können. Damit wird die Sicherheit bei Unterhaltsarbeiten und bei elektrischen Störfällen sichergestellt.

Vorzugsweise ist mindestens einer oder sogar jeder Versorgungseinheit VE, also z.B. jedem Antriebsmotor, ein Kopplungsmodul KM zugeordnet, über welches die Versorgungseinheit VE mit dem Zwischenkreisverbundnetz verbunden ist.

Eine vorteilhafte Lösung besteht darin, dass zwischen papierführenden Elementen, z.B. Rollenwechsler, Zugwalzen, Gegendruckzylinder, Trichterwalzen und Falzapparat (Verbraucher), und nicht papierführenden Elementen, z.B. Druckwerke (Erzeuger), unterschieden wird. Die nicht papierführenden Elemente versorgen bei Bedarf die papierführenden Elemente. Zu diesem Zweck wird mindestens ein Stromrichtungselement, wie z.B. eine Diodeeingebaut, die den Energiefluss nur in eine Richtung, z.B. von den nicht papierführenden Elementen zu den papierführenden Elementen zulässt.

Damit im Normalbetrieb kein unerwünschter Strom fließen kann, wird die Zwischenkreisspannung der Verbraucher etwas höher als die Zwischenkreisspaunung der Erzeuger eingestellt. Hierzu können z.B. die verwendeten Gleichrichter 11a geeignet ausgelegt werden und/oder es können Aufwärtswandler in den Zwischenkreisen vorgesehen sein. Ein geeignetes Element, wie z.B. ein Stromrichtungs- und/oder Schaltelement sorgt in den Zwischenkreisen der Verbrauchermodule dafür, dass die Zwischenkreisspannung nur durch die eigene Versorgungseinheit VE aufgebaut werden kann. Beispielsweise wird eine Diode und/oder ein mechanischer oder elektrischer Schalter, vorzugsweise ein Halbleiterschalter, z.B. IGBT, FET, Thyristor, etc. zwischen dem Zwischenkreis und dem Zwischenkreisverbundnetz vorgesehen. Damit wird verhindert, dass die Erzeuger die Zwischenkreiskondensatoren der Verbraucher laden müssen. Ist der eigene Zwischenkreis geladen, kann z.B. über eine oder mehrere Dioden und/oder das geschlossene Schaltelement Strom in des Zwischenkreisverbundnetz fließen.

Eine weitere vorteilhafte Lösung besteht darin, dass alle Module KM mit einem Halbleiterschaltelement ausgerüstet werden. Das Schaltelement wird am DC-Zwischenkreis angeschlossen. Es besteht aus einem Schalter S, bevorzugt einem Halbleiterschalter (IGBT, FET, Thyristor, etc.) und einer antiparallel geschalteten Diode, wie in Figur 4b gezeigt. Falls nötig, kann noch eine Induktivität in Serie geschaltet werden. Bei dieser Lösung werden alle DC-Zwischenkreise auf dem gleichen Spannungsniveau betrieben. Jeder Zwischenkreis kann mit dem Zwischenkreisverbundnetz Energie austauschen.

Mit dem Schaltelement kann dafür gesorgt werden, dass die Zwischenkreisspannung nur durch die eigene Versorgungseinheit aufgebaut werden kann. Damit wird verhindert, dass ein Modul die Zwischenkreiskondensatoren anderer Module laden muss. Ist der eigene Zwischenkreis geladen, kann das Schaltelement durch Betätigung oder Ansteuerung des Schalters S eingeschaltet werden.

Ein Vorteil dieser Lösungen besteht darin, dass im Netzstörfall keine Schaltvorgänge in einem elektrischen Kreis notwendig sind. Damit kann das Einleiten einer Bremsrampe deutlich schneller erfolgen.

Eine Netzstörung auf dem Zwischenkreisverbundnetz kann detektiert werden. Die beschriebenen Schaltelemente verhindern, dass ein einzelner Verbraucher eine bedeutend tiefere Zwischenkreisspannung aufweist als die Spannung im Zwischenkreisverbundnetz. Kurze Spannungseinbrüche oder kurze Unterspannungen im Versorgungsnetz oder AC-Netz führen noch nicht zwingend zu einem Absinken der Zwischenkreisspannung. Erst wenn die Zwischenkreisspannung unter einen bestimmten Wert absinkt, werden Maßnahmen ergriffen, um den Netzausfall zu beherrschen.

Im weiteren zeigt diese Lösung ein vorteilhaftes Verhalten wenn das AC-Versorgungsnetz wieder fehlerfrei funktioniert. Kehrt das Netz zurück, können die Versorgungseinheiten die Zwischenkreise sofort wieder mit elektrischer Energie versorgen. Das Aufsynchronisieren übernimmt die Gleichrichterbrücke in der Versorgungseinheit automatisch. Es spielt dabei keine Rolle, ob der Gleichrichter netzgeführt oder getaktet angesteuert wird.

Ein Vorteil dieser Lösung besteht auch darin, dass im Falle der Netznormalisierung keine Schaltvorgänge in einem elektrischen Kreis notwendig sind. Die Versorgungseinheiten können die Aufsynchronisation individuell vornehmen, sie müssen zeitlich nicht aufeinander abgestimmt werden.

Die Erfindung ist vorteilhaft für alle Maschinen, die kinetische Energiespeicher z.B. in Form von rotierenden Zylindern o.ä. aufweisen. Besonders gut kann die Erfindung auf Druckmaschinen angewendet werden. Im weiteren ist die Erfindung auf Maschinen anwendbar, die eine Materialbahn oder einen Draht transportieren. (z.B. Convertingmaschinen, Siliziumsägen etc.)

Figur 3 zeigt, dass die Versorgungseinheiten VE aus dem elektrischen Drehstromnetz mit Energie versorgt werden. Diese Versorgungseinheiten speisen die Zwischenkreise der Antriebssysteme mit Gleichstrom (DC). Über diesen Zwischenkreis kann elektrische Leistung einerseits mit dem Wechselstromnetz, andererseits aber auch zwischen angeschlossenen Verbrauchern, ausgetauscht werden. Zusätzlich zu den Zwischenkreisen der Antriebssysteme wird ein gestrichelt eingezeichnetes Zwischenkreisverbundnetz aufgebaut. Über Kopplungsmodule KM werden die Zwischenkreise der Antriebssysteme oder Versorgungseinheiten VE an das Zwischenkreisverbundnetz angeschlossen.

Die Spannungswerte des elektrischen Drehstromnetzes und der Spannungswert des Zwischenkreisverbundnetzes werden z.B. einer zentralen Steuerungseinheit, wie z.B. einer Sektionssteuerung SS, zur Verfügung gestellt.

Figur 3 zeigt, dass die Zwischenkreise der Antriebssysteme über Kopplungsmodule KM an das Zwischenkreisverbundnetz gekoppelt werden. Die Kopplungsmodule KM können Dioden, Transistoren, Thyristoren, Schütze oder andere geeignete Halbleiterbauteile oder elektromechanische Elemente enthalten. Es ist auch eine Kombination der erwähnten Elemente möglich.

Die Kopplungsmodule KM verhindern einen ungewollten Leistungsfluss innerhalb der Maschine. Sie können so eingebaut werden, dass ein elektrischer Strom aus dem Antriebssystem in das Zwischenkreisverbundnetz fließen kann, wie in Figur 4a gezeigt, was z.B. bei den Erzeugern (z.B. Druckwerke) verwendet werden kann. Sie können aber auch so eingesetzt werden, dass ein elektrischer Strom aus dem Zwischenkreisverbundnetz in das Antriebssystem hinein fließen kann. Potenzielle Verbraucher können so Energie aus dem Zwischenkreisverbundnetz beziehen, potenzielle Erzeuger können Energie in das Zwischenkreisverbundnetz einspeisen. Werden die lokalen Zwischenkreisspannungen der potenziellen Verbraucher, im Betrieb mit elektrischer Versorgung aus dem Wechselspannungsnetz, etwas höher geregelt als die lokalen Zwischenkreise der Erzeuger, fließt im Netzbetrieb kein Strom im Zwischenkreisverbindungsnetz. Bei Ausfall des Versorgungsnetzes sinkt die Zwischenkreisspannung der Verbraucher ab und die Dioden der Kopplungsmodule KM können Strom führen.

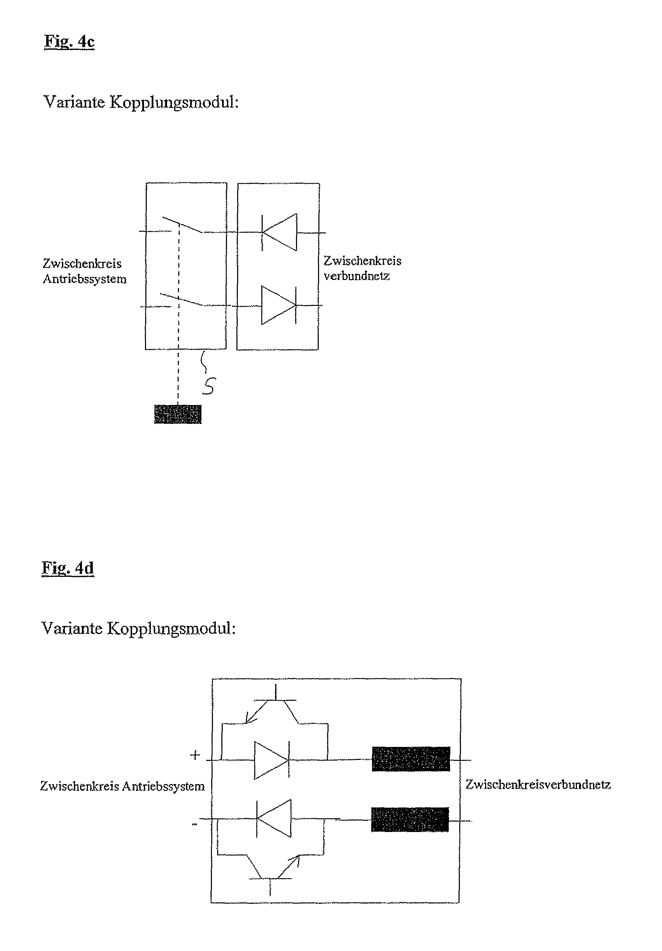

In Figur 4b und 4c ist gezeigt, dass ein geeignetes Schaltelement in den Zwischenkreisen der Verbrauchermodule dafür sorgt, dass die Zwischenkreisspannung nur durch die eigene Versorgungseinheit aufgebaut werden kann. Damit wird verhindert, dass die Erzeuger die Zwischenkreiskondensatoren der Verbraucher laden müssen. Beim Ladevorgang oder Hochfahren eines Zwischenkreises ist das Schaltelement S vorzugsweise offen. Ist der eigene Zwischenkreis geladen, kann das Schaltelement eingeschaltet oder geschlossen werden.

Figur 4d zeigt, dass ein geeignetes Schaltelement in den Zwischenkreisen der Verbrauchermodule dafür sorgt, dass die Zwischenkreisspannung nur durch die eigene Versorgungseinheit aufgebaut werden kann. Ist der eigene Zwischenkreis geladen, kann das Schaltelement eingeschaltet werden. Zu dem Schaltelement kann eine Induktivität in Serie geschaltet werden. Jedes Schaltelement ist vorzugsweise parallel zu einem Stromrichtungselement, wie z.B. einer Diode, geschaltet. Vorzugsweise kann nach dem Einschalten des Schaltelementes auch ein Strom über oder durch das Schaltelement vorzugsweise in Gegenrichtung zur Durchlassrichtung der Diode fließen.

Die Erfindung betrifft gemäß einem weiteren Aspekt ein Verfahren und eine Vorrichtung zum Stillsetzen einer Druckmaschine bei Netzausfall und kann insbesondere bei Rotationsdruckmaschinen mit Direktantriebstechnik eingesetzt werden.

Spätestens seit der Einführung der Direktantriebstechnik im Druckmaschinenbau sind Antriebssysteme an Druckmaschinen bekannt, die aus dem dreiphasigen elektrischen Versorgungsnetz über einen Gleichrichter einen Gleichspannungszwischenkreis speisen. Diese Gleichrichter sind auch in der Lage Energie aus dem Zwischenkreis in das elektrische Netz zurückzuspeisen. Aus diesem Zwischenkreis werden über geeignete Wechselrichter die Antriebe der Druckmaschine mit Energie versorgt. Auch diese Wechselrichter sind in der Lage Energie aus den Antrieben in den Zwischenkreis zurückzuspeisen. Diese Eigenschaften werden seit der Einführung der Direktantriebstechnik verwendet, um den gesamten Energiebedarf der Druckmaschine zu verringern. Ebenfalls seit diesem Zeitpunkt ist die Idee bekannt, bei Netzausfall den kinetischen Energieinhalt zu nutzen, um die Druckmaschine kontrolliert stillzusetzen.

Es ist möglich, dass die kinetische Energie des Gesamtsystems ausgenutzt wird, um die Maschine stillzusetzen, wie z.B. in der EP 0 747 214 A2 beschrieben. Die Bremsrampe wird dabei vorzugsweise so gewählt, dass die Gleichstromzwischenkreise immer auf der vollen Gleichspannung betrieben werden. Bei kleinen Drehzahlen steht jedoch zuwenig kinetische Energie zur Verfügung, um die Gleichstromzwischenkreise zu speisen. Wenn die Gleichstromzwischenkreise unter einen bestimmten Wert absinken, können die Antriebe nicht mehr kontrolliert werden.

Es kann die Netzspannung überwacht und bei Netzausfall können bewegliche Elemente abgebremst werden, wie in der DE 20 2005 020 612 U1 beschrieben. Die kinetische Energie wird bei diesem Vorgang in elektrische Energie umgewandelt, die zur Weiterführung des Betriebs der Anlage verwendet wird. Die Ausführung ohne externe Schwungräder hat den Nachteil, dass bei kleinen Drehzahlen zu wenig Energie zur Verfügung steht, um die Antriebe zu kontrollieren. Die Ausführung mit externen Schwungrädern hat den Nachteil, dass diese externen rotierenden Massen den Gesamtwirkungsgrad der Anlage negativ beeinflussen. Zudem ist die Dimensionierung dieser Massen abhängig von der Anlagengröße. Insbesondere bei nachträglichen Anlagenerweiterungen fallen wiederum beträchtliche Kosten für die Erweiterung der externen Schwungmassen an.

Gleichspannungszwischenkreise können über einen Gleichspannungsversorgungsbus parallel geschaltet sein, wie in der EP 1 593 501 A2 beschrieben. Dieser Versorgungsbus wird z.B. von einem Versorgungsmodul mit einer gleichgerichteten Netzeingangsspannung versorgt. Eine solche Einrichtung hat den Nachteil, dass der Zwischenkreis, der über die ganze Maschine geführt wird, über einen einzigen Gleichrichter eingespeist wird. Fällt dieser Gleichrichter aus, kann die ganze Maschine nicht mehr betrieben werden. Zudem muss dieser Gleichrichter sehr leistungsstark ausgeführt werden, da er die ganze Maschine mit Gleichstrom versorgen muss. Insbesondere dann, wenn nur Teile der Druckmaschine verwendet werden, fallen unnötige Verluste in Drosselspulen und dergleichen an.

Es kann eine unterbrechungsfreie Stromversorgung (USV) verwendet werden, die der Druckmaschine vorgeschaltet wird, wie in der EP 1 223 656 A1 beschrieben. Bei einem Netzausfall wird dann z.B. eine Steuerfolge abgearbeitet, die einen standardmäßig definierten Produktionshalt auslöst und im weiteren Verlauf wird die Druckmaschine in einen Standby-Betrieb versetzt. Einzelne Verbraucher in Form von Kühlaggregaten und Pumpen können abgeschaltet werden. Eine solche Einrichtung hat den Nachteil, dass die Maschine über die USV betrieben wird. Dadurch entstehen nicht unerhebliche Verluste in der Größenordnung von einigen Prozenten der bezogenen Leistung. Ein Dauerbetrieb lohnt sich daher nur für Netze mit einer relativ hohen Ausfallwahrscheinlichkeit.

Druckmaschinen mit Direktantrieben haben den Nachteil, dass Spannungseinbrüche und Spannungsunterbrüche in der Regel zum Riss von allen Bahnen führen, da die Antriebe nicht mehr kontrolliert werden können. Bei zeitkritischen Produktionen kann schon ein einzelner Zwischenfall zu einer uneinholbaren Verspätung führen.

Solche Zwischenfälle können z.B. durch Vorschalten von rotierenden USV-Anlagen verhindert werden, wie z.B. in der EP 0 872 942 A2 beschrieben. Solche Lösungen sind auf der einen Seite teuer in der Anschaffung, auf der anderen Seite teuer im Betrieb aufgrund ihrer eigenen Verluste. Des Weiteren sind diese Anlagen nur bedingt erweiterbar. Das heißt, dass jede Maschinenerweiterung entweder von Anfang an eingeplant werden muss, oder es muss beim Zeitpunkt des Maschinenausbaus mit erheblichen Kosten für die Erweiterung der USV-Anlage gerechnet werden.

Mit der vorliegenden Erfindung soll nun das Problem der nichtkontrollierbaren Antriebe gelöst werden, ohne dabei die beschriebenen Nachteile in Kauf nehmen zu müssen. Die Druckmaschine soll bei Netzausfall ohne Papierriss stillgesetzt werden können.

Das dezentrale Gleichspannungszwischenkreis-Einspeisekonzept soll vorzugsweise beibehalten werden können. Damit wird die Zuverlässigkeit der Anlage auf hohem Niveau gehalten und die einzelnen Maschinenmodule können rationell gefertigt und getestet werden.

Die erfindungsgemäße Einrichtung soll keine oder praktisch keine zusätzlichen Energieverluste erzeugen und soll bei einer Maschinenerweiterung ohne spezielle Investitionen automatisch der neuen Maschinengröße angepasst werden können.

Des Weiteren soll die Erfindung das Problem lösen, dass bei kleinen Maschinendrehzahlen zuwenig kinetische Energie zur Stillsetzung der Antriebe zur Verfügung steht.

Wird ein Netzausfall detektiert, indem z.B. die Spannung im Versorgungsnetz innerhalb eines vorgegebenen Zeitraums von einigen (z.B. 1, 2, 5, 10, 20, 50, 100, 200 oder 500) ms unter einen vorgegebenen Mindestwert von z.B. 80% oder 85% der Nenn- oder auch Maximalspannung abfällt, so wird in einem ersten Schritt die Trennung der Maschine vom elektrischen Netz sichergestellt. Das kann über einen herkömmlichen Leistungsschalter, einen Hauptschütz, oder besonders vorteilhaft über einen schnellen Halbleiterschalter, wie z.B. einen Thyristor oder IGBT, erfolgen.

Die bekannten Lösungen weisen nicht daraufhin, dass die sichere und vor allem schnelle Netztrennung ein entscheidendes Merkmal eines Stillsetzverfahrens bei Netzausfall ist.

Die Regelung und damit die Aufrechterhaltung der Zwischenkreisspannung in den Antriebssystemen hat Priorität. Die Antriebe der Druckmaschine werden entsprechend gesteuert.

Vorzugsweise wird nach der Detektion eines Netzausfalls die Druckmaschine so vom externen elektrischen Versorgungs- oder Stromeinspeisenetz getrennt, dass an der Druckmaschine ein Inselnetz aufgebaut wird oder ist, welches mindestens zwei und bevorzugt mehrere Druckmaschinenkomponenten, wie z.B. den Rollenwechsler, Drucktürme, Wendeetagen und/oder einen Falzturm miteinander verbindet. Dabei weisen die einzelnen Druckmaschinenkomponenten jeweils mindestens eine Versorgungseinheit auf, welche an das z.B. im Dreiphasenbetrieb oder Gleichstrombetrieb betriebenen Inselnetz angeschlossen ist und welche z.B. über einen Gleichstrom (DC)-Zwischenkreis ein oder mehrere Motoren der jeweiligen Druckmaschinenkomponente z.B. über zwischengeschaltete AC/DC-Wandler (Gleichrichter) und/oder DC/AC-Wandler (Wechselrichter) mit Strom versorgt werden können. Das Inselnetz der Druckmaschine wird dabei vorzugsweise zur Synchronisation der Druckmaschinenkomponenten untereinander und besonders bevorzugt zur Synchronisation mehrerer zu einem Antriebsverbund zusammengeschalteter Druckmaschinenkomponenten oder Versorgungseinheiten verwendet, welche auch getrennt voneinander angetrieben oder gespeist werden können und vorzugsweise zumindest innerhalb des jeweiligen Antriebsverbundes synchronisiert sind. Dabei wird vorteilhaft ein Antriebsverbund durch papierführende Elemente, wie z.B. Rollenwechsler, Wendeetagen und Falzturm, und ein davon getrennter Antriebsverbund durch nicht-papierführende Druckmaschinenkomponenten, wie z.B. die Drucktürme, gebildet.

In dem Inselnetz oder auch in dem Zwischenkreis kann ein Dreiphasensystem ebenso wie ein Gleichspannungssystem verwendet werden, wie nachfolgend insbesondere unter Bezugnahme auf die Figuren 1a und 1b detaillierter beschrieben. Prinzipiell ist es auch möglich, falls das Inselnetz der Druckmaschine in mindestens zwei getrennte Netze aufgeteilt wird, um z.B. einen Verbund papierführender Elemente und einen davon getrennten Verbund nicht-papierführende Elemente zu bilden, dass in jedem Verbund das gleiche System (Dreiphasensystem oder Gleichspannungssystem) verwendet wird oder dass getrennte Kreise oder Verbünde unterschiedliche Systeme verwenden, also z.B. ein Gleichspannungssystem im Verbund papierführender Elemente und ein Dreiphasensystem oder Wechselstromsystem im Verbund nicht-papierführender Elemente oder umgekehrt.

Vorteilhaft werden Einheiten oder Druckmaschinenkomponenten, welche bei der Umstellung des bisher innerhalb der Druckmaschine verwendeten Spannungssystems beschädigt werden könnten, vor dieser Umstellung auf z.B. einen Gleichstrom-Betrieb oder einen zweiphasigen Wechselstrombetrieb, abgeschaltet.

Vorzugsweise werden diejenigen Druckmaschinenkomponenten oder Elemente, welche in Kontakt mit der Papierbahn sind, aber keine papierführenden Elemente sind, wie z.B. Walzen in den Drucktürmen, von der Papierbahn abgestellt, wenn ein Netzausfall detektiert wird, um bei einer möglichen nachfolgende Aufteilung des Antriebsverbundes eine Beeinflussung der durch die Druckmaschine geführten Papierbahn zu verhindern, so dass die Papierbahn vorzugsweise nur durch das kontrollierte Herunterfahren des Antriebsverbundes papierführender Elemente kontrolliert und möglichst beschädigungsfrei heruntergefahren und stillgesetzt werden kann.

Sofern in dieser Anmeldung von dem Stillsetzen oder Herunterfahren einer Druckmaschine gesprochen wird, soll darunter sowohl der Vorgang des Abbremsens, als auch ein Beschleunigungsvorgang, verstanden werden, welche jeweils das Ziel haben Druckmaschinenkomponenten in Richtung auf das gewünschte kontrollierte Herunterfahren oder Stillsetzen der Druckmaschine möglichst aufeinander synchronisiert herunterzufahren. Dies kann, falls z.B. durch eine Steuereinheit festgestellt wird, dass eine Druckmaschinenkomponente oder ein Motor zu schnell abgebremst wurde, auch ein Beschleunigen der jeweiligen Komponente oder des jeweiligen Motors erforderlich machen, um wieder mit den anderen Komponenten z.B. eines Antriebsverbundes synchronisiert zu sein.

Gemäß einem weiteren Aspekt bezieht sich die Erfindung auf ein Verfahren zum Anfahren einer Druckmaschine, um die Druckmaschine bei einem detektierten Netzausfall auch kontrolliert stillsetzen oder herunterfahren zu können, wobei erfindungsgemäß zunächst die Druckwerke beschleunigt werden und anschließend nach teilweiser oder vollständiger Beschleunigung der Druckwerke die Papierbahn mit den papierführenden Elementen beschleunigt wird. Dies ist vorteilhaft, da bei einem detektierten Netzausfall die Papierbahn möglichst kontrolliert abgebremst oder stillgesetzt werden soll, was möglicherweise zusätzliche Energie zum kontrollierten Herunterfahren erfordert, welche beispielsweise aus den zuvor beschleunigten Druckwerken und insbesondere aus deren Abbremsvorgang bei der Umwandlung kinetischer Energie in elektrische Energie und Rückspeisung ins Inselnetz gewonnen werden kann.

Allgemein kann zum kontrollierten Herunterfahren oder Stillsetzen einer Druckmaschine Energie aus dem Abbremsvorgang der herunterzufahrenden Druckmaschinenkomponenten gewonnen und z.B. in das Inselnetz der Druckmaschine eingespeist werden, so dass die kinetische Energie des Gesamtsystems ausgenutzt wird, um die Druckmaschine stillzusetzen, wie auch im oben beschriebenen Stand der Technik beschrieben, dessen diesbezügliche Lehre in diese Anmeldung aufgenommen wird. Die Gewinnung von elektrischer Energie aus kinetischer Energie von Druckmaschinenkomponenten ist im Stand der Technik bekannt, wie beispielhaft oben erwähnt, und wird folglich in dieser Anmeldung nicht detaillierter beschrieben.

Ergänzend oder alternativ ist es auch möglich, dass externe oder zusätzliche Komponenten oder eine unterbrechungsfreie Stromversorgung verwendet werden, um die für das Stillsetzen oder kontrollierte Herunterfahren der Druckmaschine erforderliche Energie zu liefern. Externe oder zusätzliche Energiespeicher, wie z.B. ein oder mehrere Generatoren mit Verbrennungsmotor, zusätzliche Schwungmassen, Pufferkondensatoren, Akkumulatoren, Brennstoffzellen etc. sind im Stand der Technik bekannt und können erfindungsgemäß zur Energieversorgung der Druckmaschine und insbesondere zur Speisung des Inselnetzes verwendet werden, um z.B. unterbrechungsfrei zumindest für den Zeitraum nach dem Netzausfall oder nach dem Trennen des Inselnetzes vom Versorgungsnetz bis zum kontrollierten Herunterfahren oder Stillsetzen der Druckmaschine Strom (Drehstrom, Wechselstrom und bevorzugt Gleichstrom) zu liefern.

Über einen Netzmaster wird im Inselnetz der Maschine z.B. ein 3-phasiges elektrisches Netz aufgebaut. Alle verbundenen Elemente synchronisieren sich mit diesem Netz und können damit Energie austauschen. Besonders vorteilhaft ist dabei, dass anfallende Energie nicht in Bremswiderständen verheizt werden muss, sondern anderen Elementen zur Verfügung gestellt werden kann. Daraus ergibt sich eine flachere Anhalterampe, durch welche Papierrisse verhindert werden können.

Es ist auch möglich, dass die über die Maschine verteilten Versorgungseinheiten VE nach dem Trennen der Maschine vom elektrischen Netz auf der bestehenden 3-phasigen Verkabelung ein DC-Netz aufbauen. Über diesen temporär gebildeten Zwischenkreis können jetzt die einzelnen Antriebe auf einfachste Weise Energie austauschen.

Bei dieser Lösung entfällt der Nachteil, dass eine zentrale große Einspeiseeinheit erforderlich ist und dass der DC-Bus physikalisch auf der Maschine verlegt werden muss. Zudem ist die hier vorgeschlagene Lösung skalierbar. Das heißt wenn die Maschine mit weiteren Elementen ausgebaut wird, muss keine zentrale Gleichstromversorgungseinheit vergrößert werden.

Vorzugsweise können mehrere Antriebsverbunde gebildet werden. Das hat den Vorteil, dass z.B. papierführende Elemente schneller abgebremst werden als nicht papierführende Elemente. Damit ist sichergestellt, dass auch bei kleiner Drehzahl die papierführenden Elemente mit Energie versorgt werden können.

Es kann sein, dass die Papierbahn erst nach den Druckwerken beschleunigt wird. Dieser Umstand kann verwendet werden, um sicherzustellen, dass die papierführenden Elemente im Falle eines Netzausfalls bereits bei kleinen Drehzahlen mit genügend Energie aus den Druckwerken versorgt werden können.

Nachfolgend wird eine bevorzugte Ausführungsform unter Bezugnahme auf die beiliegenden Figuren beschrieben. Es zeigen:

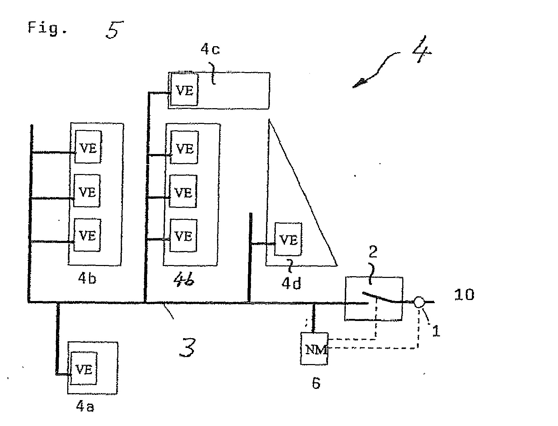

- Figur 5: eine schematische Darstellung einer Druckmaschine mit einem Stromversorgungsnetz;
- Figur 5A: eine erste Ausführungsform einer mit einem Dreiphasennetz verbundenen Versorgungseinheit;
- Figur 5B: eine zweite Ausführungsform einer mit einem Gleichspannungsnetz verbundenen Versorgungseinheit;

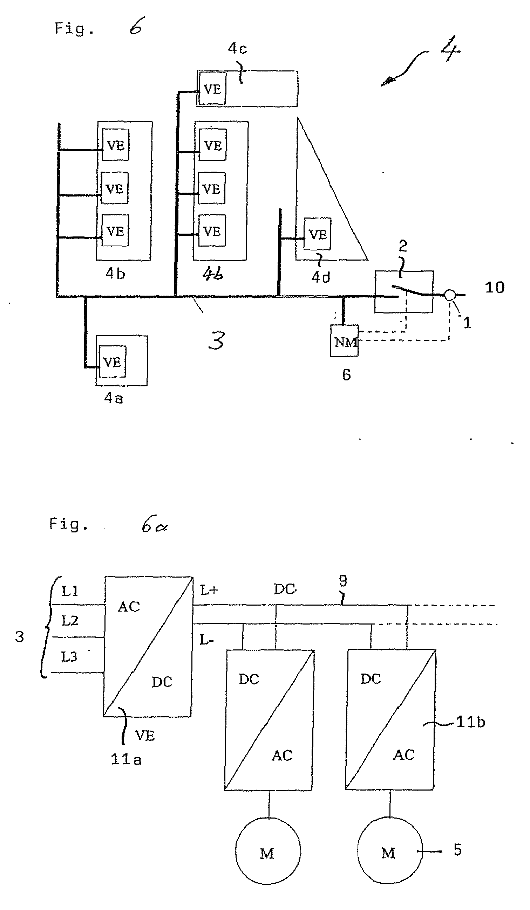

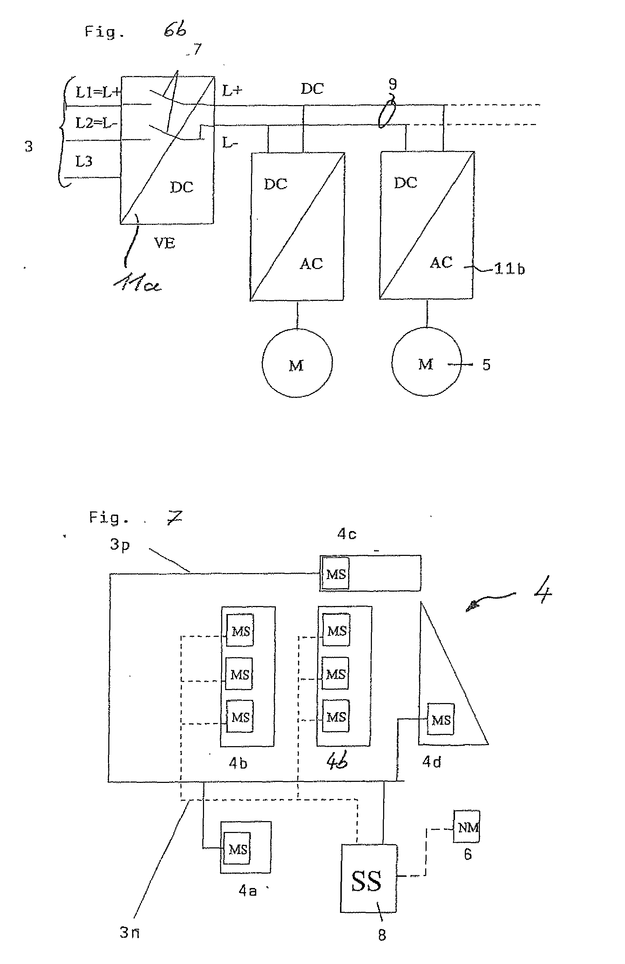

- Figur 6: eine schematische Darstellung der in Figur 5 gezeigten vom Versorgungsnetz getrennten Druckmaschine aufgeteilt in getrennte Antriebsverbunde;
- Figur 7: das Herunterfahren der Antriebsverbunde nach Detektion eines Spannungsausfalles gemäß einer ersten Ausführungsform; und

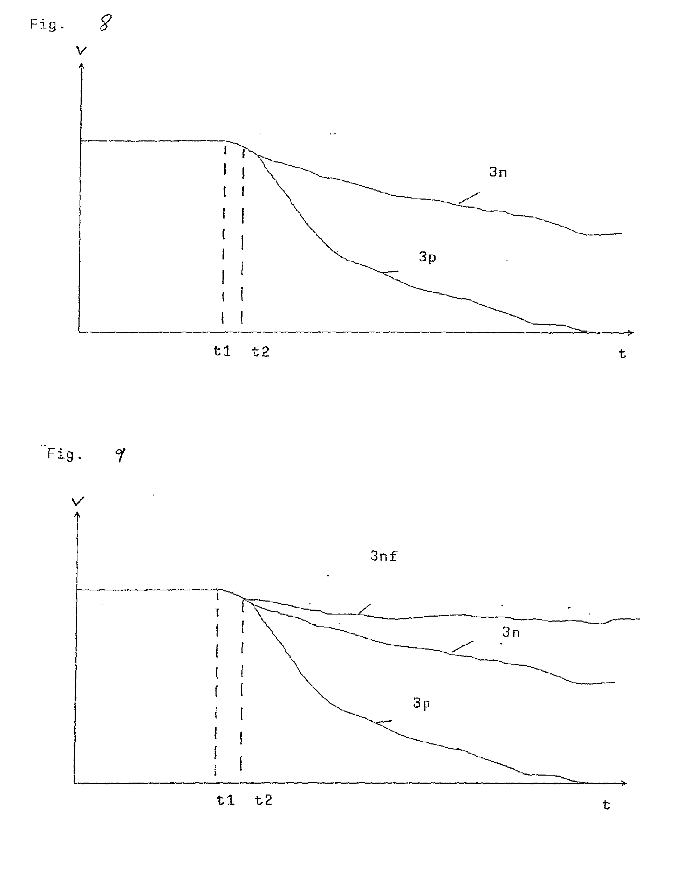

- Figur 8: das Herunterfahren der Antriebsverbunde nach Detektion eines Spannungsausfalles gemäß einer zweiten Ausführungsform.

Figur 5 zeigt eine schematische Darstellung einer Druckmaschine 4 bestehend aus den Funktionseinheiten Rollenwechsler 4a, Drucktürme 4b, Wendeetagen 4c und Falzturm 4d. Die Druckmaschinenkomponenten 4a bis 4d weisen jeweils mindestens eine Versorgungseinheit VE auf, welche mit dem in Fettdruck dargestellten Netz 3 der Druckmaschine 4 verbunden sind. In dem Netz 3 der Druckmaschine 4 kann z.B. ein DreiPhasensystem oder ein Gleichstromsystem realisiert sein. Die mit dem Netz 3 verbundenen Versorgungseinheiten VE speisen jeweils über Gleichrichter 11a Gleichstrom in Zwischenkreise 9 der durch Motoren 5, welche über Wechselrichter 11b gespeist werden, angetriebenen Antriebssysteme.

Ein Netzausfallsdetektionselement 1 führt eine Netzmessung des 3-phasigen Versorgungsnetzes 10 durch und ist mit einem Netzmaster 6 verbunden, welcher ein Netztrennelement 2 z.B. in Form eines Leistungsschalters ansteuert, um bei einem detektierten Netzausfall oder einem detektierten Absenken oder Nachlassen der Netzspannung das Netz 3 der Druckmaschine 4 von dem externen oder Speisenetz 10 zu trennen.

Der Netzmaster 6 detektiert den Netzausfall und trennt das elektrische Maschinennetz 3 sofort vom elektrischen Versorgungsnetz ab. Die Antriebe werden so geregelt, dass die Zwischenkreisspannungen aller Versorgungssysteme in einem zulässigen Bereich sind.

Wenn möglich werden die Elemente, welche sich an der Papierbahn befinden und diese nicht führen, vom Papier abgestellt (z.B. Druckbrücken), damit sie mit einer beliebigen Drehzahl betrieben werden können.

Der Netzmaster 6 baut ein elektrisches Inselnetz auf, mit dem die Antriebssysteme und insbesondere die Motoren 5, welche beim Abbremsen auch als Generatoren 5 betrieben werden können, Energie in beide Richtungen austauschen können. Dieses Inselnetz kann ein Dreiphasensystem mit Gleichrichter 11 a und Wechselrichter 11b (Fig. 1a), aber auch ein Gleichspannungssystem (Fig. 1b) sein. Wird ein Gleichspannungssystem aufgebaut, schalten die Versorgungseinheiten ihren internen DC-Zwischenkreis 9 auf die Dreiphaseninstallation der Maschine z.B. mittels Transistorschalter 7 durch. Zum Beispiel wird L1 zu L+ und L2 zu L-. Alle Elemente, die durch die DC Spannung beschädigt werden könnten, sollten zum Zeitpunkt des Aufschaltens der DC-Spannung abgetrennt sein.

Figur 6 zeigt die in Figur 1 gezeigte schematische Darstellung der Druckmaschine 4, welche nach Detektion eines Netzausfalls bereits vom externen oder Stromeinspeisungsnetz 10 getrennt wurde. Der Netzmaster 6 ist mit der Sektionssteuerung SS 8 verbunden, welche getrennt voneinander den Verbund papierführender Elemente 3p und den Verbund nicht papierführender Elemente 3n steuert. Über den Verbund papierführender Elemente 3p sind der Rollenwechsler 4a, die Wendeetagen 4c und der Falzturm 4d miteinander verbunden, wobei jeweils mindestens eine Modulsteuerung MS zur Steuerung der jeweiligen Druckmaschinenkomponente 4a, 4c und 4d vorgesehen ist. Der Verbund nicht papierführender Elemente 3n umfasst die Drucktürme 4e, deren Druckwalzen vorzugsweise schon unmittelbar nach der Detektion des Netzausfalles von der Papierbahn abgestellt worden sind.

Der Antriebsverbund der Maschine wird somit aufgeteilt in papierführende und nicht papierführende Elemente. Damit wird sichergestellt, dass die papierführenden Elemente 4a, 4c, 4d bis zum Stillstand mit Energie versorgt werden können, welche z.B. aus den abgebremsten Drucktürmen 4b stammt. Es können auch beliebige weitere Antriebsverbunde gebildet werden, zum Beispiel um die Regelung des Inselnetzes zu verbessern. Der Antriebsverbund wird z.B. aufgetrennt, indem zwei oder mehr Leitachssollwerte auf der Maschine verteilt werden. Die Leitachssollwerte werden über einen geeigneten Feldbus, z.B. Sercos, an die Modulsteuerungen gesendet.

Das Inselnetz 3 kann z.B. in galvanisch getrennte Systeme oder Verbunde aufgeteilt werden, welche jedoch elektrische Leistung oder Signale untereinander austauschen können. Alternativ oder ergänzend ist es auch möglich, dass ein oder mehrere Verbunde gebildet werden, welche sich steuerungstechnisch an verschiedenen innerhalb des Verbundes jedoch vorgegebenen Führungssollwerten oder Leitachsen orientieren. In diesem Fall können die in Figur 6 gezeigten Verbunde 3p und 3n auch als so genannte virtuelle Verbunde angesehen werden.

Figur 7 zeigt die als Sollwert vorgegebene Produktionsgeschwindigkeit v aufgetragen über die Zeit t vor und nach einem zum Zeitpunkt t1 stattfindenden Spannungsausfall.

Nach Detektion des Spannungsausfalles wird der Antriebsverbund zum Zeitpunkt t2 aufgeteilt in den Verbund nicht papierführender Elemente 3n und den Verbund papierführender Elemente 3p, welche unabhängig voneinander, wie aus Figur 3 ersichtlich, heruntergefahren werden.

Eine Leitachse 3n führt die nicht papierführenden Elemente. Nach Bedarf werden diese gebremst oder beschleunigt mit dem Ziel die dreiphasige Netzspannung und Frequenz bzw. die Gleichspannung in zulässigen Grenzen zu halten.

Eine Leitachse 3p führt die papierführenden Elemente. Diese Maschinenteile werden in einer geeigneten Funktion stillgesetzt. Diese Funktion ist abhängig von der Anzahl und der Art der beteiligten Elemente, sowie der Größe der Papierrollen zum Zeitpunkt des Spannungsausfalls.

Figur 8 zeigt das Herunterfahren einer Druckmaschine nach der Detektion eines Netz- oder Spannungsausfalles gemäß einer weiteren Ausführungsform, wobei eine weitere Leitachse ein nicht papierführendes Element 3nf steuern kann, das zur Feinregelung des Inselnetzes verwendet wird. In diesem Fall wird mit der Leitachse 3n der nicht papierführenden Elemente dafür gesorgt, dass der Speicher des nicht papierführenden Elementes zur Feinregelung des Netzes immer genügend gefüllt ist.

### Erfindungsgemäß kann auch folgendes durchgeführt werden:

Verfahren zur Steuerung einer ein Substrat führenden Produktionsmaschine mit mindestens zwei Einheiten mit jeweils einem eigenen Antrieb, insbesondere einer Druckmaschine, bei einer Störung in einem elektrischen Versorgungsnetz der Produktionsmaschine, wobei
a) eine Störung des Versorgungsnetzes detektiert wird, und
b) eine Verbindung zwischen den Einheiten in Form eines Zwischenkreisverbundnetzes hergestellt wird, um Energie von einer Einheit auf eine oder mehrere andere Einheiten übertragen zu können.

Verfahren wie oben, wobei jede Einheit vom Zwischenkreisverbundnetz getrennt oder mit diesem verbunden werden kann.

Verfahren wie oben, wobei in jeder Einheit ein Zwischenkreis, bevorzugt ein Gleichstrom-Zwischenkreis, erzeugt wird.

Verfahren wie oben, wobei die Verbindung einer Einheit oder eines Zwischenkreises einer Einheit mit dem Zwischenkreisverbundnetz hergestellt wird, wenn die Energie oder Spannung in der Einheit oder in dem Zwischenkreis der Einheit größer als eine vorgegebene minimale Energie oder Spannung ist.

Verfahren wie oben, wobei die vorgegebene minimale Energie oder Spannung durch den Ladezustand oder das Aufladen eines Kondensators der Einheit oder durch die in der Einheit vorhandene Spannung festgelegt wird.

Verfahren wie oben, wobei die Verbindung zwischen der Einheit oder dem Zwischenkreis der Einheit und dem Zwischenkreisverbundnetz getrennt wird, wenn die Energie oder Spannung der Einheit unterhalb einer vorgegebenen minimalen Energie oder Spannung liegt.

Verfahren wie oben, wobei im Falle der Detektion der Störung substratführende Komponenten der Produktionsmaschine kontrolliert verzögert werden.

Verfahren wie oben, bei dem im Falle der Detektion der Störung mindestens ein oder alle Antriebe der Einheiten mit dem Versorgungsnetz verbunden bleiben.

Verfahren wie oben, wobei im Falle der Detektion der Störung die Antriebe der Einheiten oder nur eines ausgewählten Teils der Einheiten vom Versorgungsnetz getrennt werden.

Verfahren wie oben, wobei im Falle eines wieder ordnungsgemäßen Funktionierens des Versorgungsnetzes die kontrolliert verzögerten Einheiten wieder beschleunigt werden.

Produktionsmaschine, insbesondere Druckmaschine umfassend:
a) erste Einheiten für die Führung eines Substrates, beispielsweise einer Bahn,
b) mindestens einen Antrieb für die ersten Einheiten,
c) zweite Einheiten für eine Bearbeitung des Substrats,
d) mindestens einen Antrieb für die zweiten Einheiten,
e) ein Versorgungsnetz für die Versorgung der Antriebe mit elektrischer Energie,
f) einen elektrischen ersten Zwischenkreis für wenigstens einen der Antriebe der ersten Einheiten,
g) einen elektrischen zweiten Zwischenkreis für wenigstens einen der Antriebe der zweiten Einheiten,
h) mindestens eine Verbindungseinrichtung, die die Zwischenkreise elektrisch miteinander vorzugsweise mittels eines Zwischenkreisverbindungsnetzes verbindet und vorzugsweise in solch einer Weise voneinander entkoppelt, dass ein Energiefluss nur von dem einen der Zwischenkreise, vorzugsweise dem zweiten Zwischenkreis, in Richtung auf den anderen der Zwischenkreise stattfinden kann.

Produktionsmaschine wie oben, bei der eine elektrische Spannung des ersten Zwischenkreises höher eingestellt ist als eine elektrische Spannung des zweiten Zwischenkreises.

Produktionsmaschine wie oben, wobei in der mindestens einen Verbindungseinrichtung ein Stromrichtungselement, vorzugsweise mindestens eine Diode, vorgesehen ist, um einen Energiefluss in nur eine Richtung, also aus der Einheit heraus oder in die Einheit hinein, zu ermöglichen.

Produktionsmaschine wie oben mit mindestens einem Schaltelement, vorzugsweise einem Halbleiterschaltelement, in der mindestens einen Verbindungseinrichtung, welches angesteuert werden kann, um die Einheit von dem Zwischenkreisverbundnetz zu trennen oder mit dem Zwischenkreisverbundnetz zu verbinden.

Produktionsmaschine wie oben, wobei der mindestens eine Schalter seriell und/oder parallel zu mindestens einem Stromrichtungselement der Verbindungseinrichtung geschaltet ist.

## Patentansprüche

1. Verfahren zum Stillsetzen einer Druckmaschine (4) bei Netzausfall, wobei ein Netzausfall des Versorgungsnetzes (10) detektiert wird und bei Detektion des Netzausfalls die Druckmaschine (4) vom elektrischen Netz (10) getrennt wird.

2. Verfahren zum Stillsetzen einer Druckmaschine bei Netzausfall gemäß Anspruch 1, wobei nach Detektion des Netzausfalles innerhalb der Druckmaschine (4) ein Inselnetz (3) bestehend aus mindestens zwei Druckmaschinenkomponente (4a, 4b, 4c, 4d) gebildet wird, welches mindestens zwei Druckmaschinenkomponenten (4a, 4b, 4c, 4d) miteinander verbindet und zur Synchronisation der Druckmaschinenkomponenten (4a, 4b, 4c, 4d) und/oder zum synchronen oder kontrollierten Abbremsen oder Herunterfahren der Druckmaschinenkomponenten (4a, 4b, 4c, 4d) verwendet werden kann.

3. Verfahren nach einem der vorhergehenden Ansprüche, wobei das Inselnetz (3) in mindestens zwei oder drei getrennte Verbundsysteme (3n, 3p, 3nf) aufgeteilt wird.

4. Verfahren nach dem vorhergehenden Anspruch, wobei mindestens ein Verbund papierführender Elemente (3p) und mindestens ein Verbund nicht papierführender Elemente (3n, 3nf) gebildet wird.

5. Verfahren nach einem der vorhergehenden Ansprüche, wobei in dem Inselnetz (3) und/oder mindestens einem Verbund (3p, 3n, 3nf) ein Dreiphasensystem realisiert wird.

6. Verfahren nach einem der vorhergehenden Ansprüche, wobei in dem Inselnetz (3) und/oder mindestens einem Verbund (3p, 3n, 3nf) ein Gleichstrom(DC)-System realisiert wird.

7. Verfahren nach dem vorhergehenden Anspruch, wobei durch Gleichstrom beschädigbare Einheiten der Druckmaschine (4) vor der Realisierung eines Gleichstromsystems im Inselnetz (3) abgeschaltet werden.

8. Verfahren nach einem der vorhergehenden Ansprüche, wobei nach der Detektion des Netzausfalles und insbesondere unmittelbar nach der Detektion des Netzausfalles von der Papierbahn abstellbare Elemente abgestellt werden.

9. Verfahren nach einem der vorhergehenden Ansprüche, wobei zum Stillsetzen oder Herunterfahren der Druckmaschine (4) einzelne Druckmaschinenkomponenten (4a-4d) oder Motoren (5) kontrolliert abgebremst oder durch Zufuhr von Energie aus dem Inselnetz (3) kontrolliert beschleunigt werden, um die Druckmaschine (4) kontrolliert herunterzufahren.

10. Verfahren nach einem der vorhergehenden Ansprüche, wobei ein Netzausfall detektiert wird, wenn mindestens fünf Millisekunden ein Spannungsabfall der Nennspannung im Einspeisenetz (10) festgestellt wird.

11. Verfahren zum Anfahren einer Druckmaschine (4), um die Druckmaschine (4) mit der ihr nach Beginn des Anfahrvorgangs innewohnenden Energie kontrolliert herunterzufahren zu können, wobei zuerst die Druckwerke (4b) beschleunigt werden und erst nach teilweiser oder vollständiger Beschleunigung der Druckwerke (4b) die Papierbahn oder die die Papierbahn führenden Druckmaschinenkomponenten (4a, 4c, 4d) beschleunigt werden.

12. Verfahren nach dem vorhergehenden Anspruch, wobei detektiert wird, ob ein Netzausfall vorliegt und nach Detektion des Netzausfalles die Druckwerke abgebremst werden und kinetische Energie aus dem Abbremsvorgang der Druckwerke in elektrische Energie umgesetzt wird, welche zum kontrollierten Herunterfahren der Papierbahn verwendet wird.

13. Vorrichtung zum Stillsetzen einer Druckmaschine (4) bei Netzausfall mit einem Netzausfalldetektionselement (1, 6) und einem Netztrennelement (2), welches mit dem Netzausfalldetektionselement (1,6) verbunden ist und bei Detektion des Netzausfalls die Druckmaschine (4) vom elektrischen Netz (10) trennen kann.

14. Vorrichtung zum Stillsetzen einer Druckmaschine (4) bei Netzausfall nach dem vorhergehenden Anspruch, wobei das Netztrennelement ein Leistungsschalter (2), ein Hauptschütz, oder ein schneller Halbleiterschalter ist.

15. Vorrichtung nach einem der zwei vorhergehenden Ansprüche, wobei sich die Druckmaschine (4) aus mehreren Funktionseinheiten (4a bis 4d) zusammensetzt, welche jeweils mindestens eine Versorgungseinheit (VE) und/oder eine Modulsteuerung (MS) aufweisen, die jeweils mit dem Netz (3) der Druckmaschine (4) verbunden sind.
